Europäisches Patentamt

European Patent Office

Office européen des brevets

(19)

(11) Veröffentlichungsnummer: **0 142 686**
**B1**

(12) # EUROPÄISCHE PATENTSCHRIFT

(45) Veröffentlichungstag der Patentschrift:
**20.11.86**

(51) Int. Cl.⁴: **F 16 C 11/06**

(21) Anmeldenummer: **84111875.5**

(22) Anmeldetag: **04.10.84**

(54) **Befestigung eines Dichtungsbalges am Gelenkgehäuse eines Kugelgelenkes.**

(30) Priorität: **22.11.83 DE 3341993**

(43) Veröffentlichungstag der Anmeldung:
**29.05.85 Patentblatt 85/22**

(45) Bekanntmachung des Hinweises auf die Patenterteilung:
**20.11.86 Patentblatt 86/47**

(84) Benannte Vertragsstaaten:
**AT BE DE FR GB IT NL SE**

(56) Entgegenhaltungen:
**EP - A - 0 047 343**
**GB - A - 1 583 673**

(73) Patentinhaber: **TRW Ehrenreich GmbH & Co. KG,
Hansa-Allee 190, D-4000 Düsseldorf 11 (DE)**

(72) Erfinder: **Mette, Ulrich, Burgstrasse 9,
D-4300 Essen 17 (DE)**

(74) Vertreter: **Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11 (DE)**

ACTORUM AG

## Beschreibung

Gegenstand der Erfindung ist die Befestigung eines Dichtungsbalges am Gelenkgehäuse eines Kugelgelenkes, bei welcher der gehäuseseitige Rand des Dichtungsbalges in einer am Gelenkgehäuse umlaufenden, im Querschnitt im wesentlichen U-förmig ausgebildeten Ringnut festgelegt ist, wobei der Balgrand eine der U-Form der Ringnut angepasste Profilierung aufweist und von einem Spannring in die Ringnut hineingedrückt ist.

Aus der DE-C-15 25 083 ist eine elastische Dichtung in Balgform für allseitig bewegliche Kugelgelenke bekannt, bei welcher der gehäuseseitige Rand des Dichtungsbalges mit einem Spannring in einer umlaufenden Ringnut des Gelenkgehäuses festgelegt wird.

Ferner ist aus der DE-C-26 25 507 eine gleichartige Befestigung für den Dichtungsbalg bekannt, bei welcher der Spannring aus mehreren miteinander verdrillten Einzeldrähten besteht. Derartige Befestigungen gewährleisten nur dann eine ausreichende Abdichtung, wenn die spezifische Flächenpressen des Dichtungsbalges im Bereich der Ringnut am Gelenkgehäuse genügend gross ist. Einer Steigerung dieser spezifischen Flächenpressung durch eine Erhöhung der Spannkraft des Spannringes sind enge Grenzen gesetzt, weil der Dichtungsbalg zerquetscht bzw. zerstört werden kann.

Davon ausgehend liegt der Erfindung die Aufgabe zugrunde, eine Befestigung eines Dichtungsbalges am Gelenkgehäuse eines Kugelgelenkes mit einem in eine umlaufende Ringnut des Gelenkgehäuses eingreifenden Spannring zu schaffen, die eine verbesserte Dichtwirkung besitzt, ohne die Spannkraft des Spannrings im Vergleich zu den bekannten Befestigungen zu erhöhen.

Zur technischen Lösung dieser Aufgabe wird eine Befestigung vorgeschlagen, bei welcher der dem Boden der Ringnut gegenüberliegende Profilbereich des Balgenrandes im aufgezogenen Zustand eine vom Nutboden sich abhebende, nach aussen gewölbte, umlaufende Falte bildet, welche sich unter dem Druck des Spannringes streckt.

Bei einer derartigen Befestigung besteht der Erfindungsgedanke darin, mit der Falte ohne eine Verdickung der Wandstärke des Dichtungsbalges eine Materialvermehrung über dem Boden der Ringnut zu erzeugen und diese anschliessend mit dem Spannring in die umlaufende Ringspalte zwischen Spannring und Gehäuse hinein zu verquetschen. Dadurch wird einerseits eine elastische Anlage des Dichtungsbalges in der Ringnut am Gelenkgehäuse und andererseits gleichzeitig eine Erhöhung der spezifischen Flächenpressung in den Umlenkbereichen des Dichtungsbalges beiderseits des Spannringes erzielt.

Bei einer praktischen Ausführungsform ist eine weitere Verbesserung der Dichtwirkung dadurch möglich, dass die Innenseite des Randes des Dichtungsbalges auf einem dem Gelenkgehäuse zugewendeten und vom Boden der Ringnut auswärts gerichteten Abschnitt mit Rillen versehen wird, welche eine Labyrinthdichtung bilden.

Weitere Einzelheiten und Vorteile des Gegenstandes der Erfindung ergeben sich aus der nachfolgenden Beschreibung der zugehörigen Zeichnung, in der eine bevorzugte Ausführungsform einer erfindungsgemäss ausgebildeten Befestigung dargestellt worden ist. In der Zeichnung zeigen:

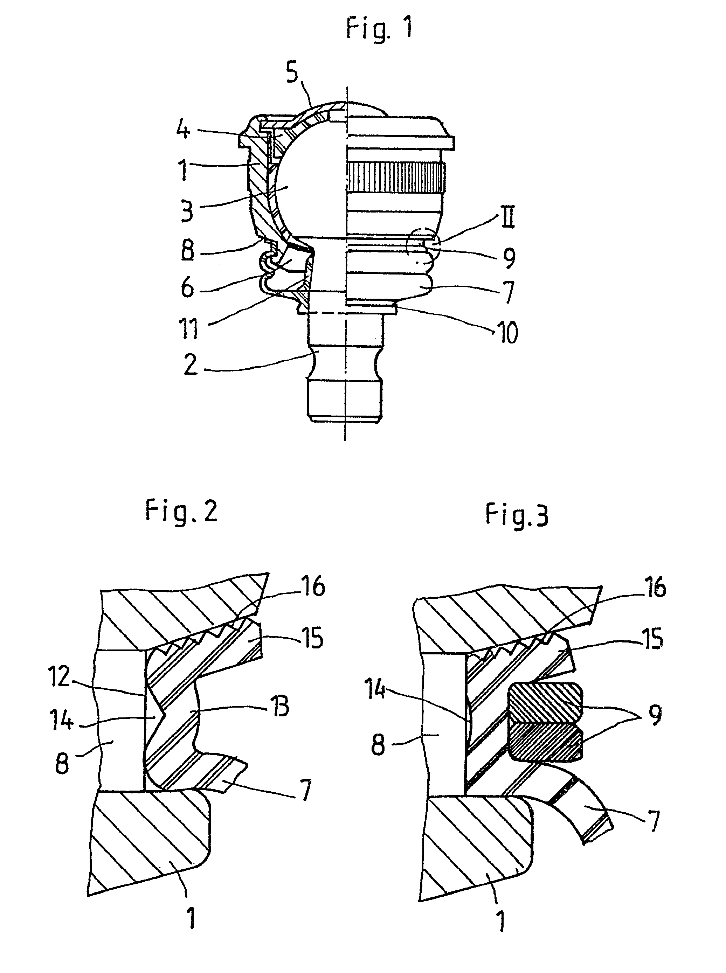

Fig. 1 ein Kugelgelenk teilweise geschnitten (linke Hälfte) und teilweise in Ansicht (rechte Hälfte);

Fig. 2 einen vergrösserten Ausschnitt der Ringnut des Gelenkgehäuses mit aufgezogenem Dichtungsbalg ohne Spannring im Querschnitt;

Fig. 3 denselben Ausschnitt mit eingesetztem Spannring.

Das Kugelgelenk besteht aus einem Gelenkgehäuse 1 mit einem darin allseits beweglich angeordneten Kugelzapfen 2, wobei zwischen dem Gelenkgehäuse 1 und einem Kugelkopf 3 eine Lagerschale 4 eingesetzt ist. An seiner Oberseite ist das Gelenkgehäuse 1 mit einer eingerollten Kappe 5 verschlossen.

Eine aus funktionstechnischen Gründen notwendige Öffnung 6 zwischen dem Gelenkgehäuse 1 und dem Kugelzapfen 2 ist mit einem Dichtungsbalg 7 abgedichtet, der gehäuseseitig in eine umlaufende Ringnut 8 eingreift und mit einem Spannring 9 befestigt ist. Zapfenseitig ist der Dichtungsbalg 7 ebenfalls mit einem Spannring 10 befestigt. Innerhalb des Dichtungsbalges 7 ist auf dem Kugelzapfen 2 eine Stützhülse 11 angeordnet, die einerseits das Hochrutschen des Dichtungsbalges 7 verhindert und andererseits bei extremen Gelenkausschlägen als Puffer zwischen dem Gelenkgehäuse 1 und dem Kugelzapfen 2 wirksam wird.

Am gehäuseseitigen Rand besitzt der Dichtungsbalg 7 eine auf die umlaufende Ringnut 8 abgestimmte Profilierung. Diese Profilierung ist so gestaltet, dass sich im aufgezogenen, also in die Ringnut 8 eingesetzten Zustand am Boden 12 der Ringnut 8 eine auswärts gerichtete Falte 13 bildet. Dabei entsteht zwischen dem Boden 12 der Ringnut 8 und der Innenseite des Dichtungsbalges 7 ein Hohlraum 14. Die Falte 13 wird beim Einsetzen des Spannringes 9 unter Verkleinerung bzw. Beseitigung des Hohlraumes 14 gestreckt. Dadurch wird das überschüssige Material des Dichtungsbalges 7 zu den Seitenwänden der Ringnut 8 hin verquetscht und in die Ringräume beiderseits des Spannringes 9 zum Gelenkgehäuse 1 hineingequetscht. In den Umlenkungsbereichen entstehen dabei erhöhte spezifische Flächenpressungen, welche die angestrebte Verbesserung der Abdichtung bewirken.

Der Dichtungsbalg 7 ist an seinem dem Gelenkgehäuse 1 anliegenden Rand 15 auf der Innenseite mit Rillen 16 versehen, welche eine Labyrinthdichtung bilden.

## Patentansprüche

1. Befestigung eines Dichtungsbalges (7) am Gelenkgehäuse (1) eines Kugelgelenkes, bei welcher der gehäuseseitige Rand des Dichtungsbalges (7) in einer am Gelenkgehäuse (1) umlaufenden, im Querschnitt im wesentlichen U-förmig ausgebildeten Ringnut (8) festgelegt ist, wobei der Balgrand eine der U-Form der Ringnut (8) angepasste Profilierung aufweist und von einem Spannring (9) in die Ringnut (8) hineingedrückt ist,

dadurch gekennzeichnet,

dass der dem Boden der Ringnut (8) gegenüberliegende Profilbereich des Balgrandes im aufgezogenen Zustand eine vom Nutboden sich abhebende, nach aussen gewölbte, umlaufende Falte (13) bildet, welche sich unter dem Druck des Spannringes (9) streckt.

2. Befestigung nach Anspruch 1, dadurch gekennzeichnet, dass die in Axialrichtung des Dichtungsbalges (7) gesehen aussenliegende, der einen Seitenfläche der Ringnut (8) gegenüberliegende Kontaktfläche des profilierten Balgrandes mit Rillen (16) versehen ist, welche eine Labyrinthdichtung bilden.

## Claims

Securing means of a gaiter seal (7) to the joint housing (1) of a ball joint, in which the housing-side edge of the gaiter seal (7) is secured in an annular groove (8), formed with a substantially U-shape in cross-section, surrounding the joint housing (1), wherein the gaiter edge has a profile fitting with the U-shape of the annular groove, and is pressed into the annular groove (8) by a clamping ring (9) characterised in that,

the profile region of the gaiter edge disposed opposite the bottom of the annular groove (8) forms, in the drawn up condition, a fold (13) rising from the bottom of the groove and outwardly arched, which fold stretches under the pressure of the clamping ring (9).

2. Securing means according to claim 1, characterised in that the contact surface of the profiled gaiter edge (7), which surface lies opposite that one side surface of the annular groove which lies outwardly when viewed in the axial direction of the gaiter seal (7), is provided with ridges (16), which form a labyrinth seal.

## Revendications

1. Fixation d'un soufflet d'étanchéité (7) sur le carter d'articulation (1) d'une articulation à rotule, dans laquelle le bord côté carter du soufflet d'étanchéité (7) est fixé dans une rainure annulaire (8) réalisée sur la périphérie du carter d'articulation (1) avec une section, essentiellement en forme de U, le bord du soufflet présentant un profil adapté à la forme en U de la rainure annulaire (8) et étant comprimé dans la rainure annulaire (8) par une bague de serrage (9),

caractérisée en ce que la partie du profil du bord du soufflet située en face du fond de la rainure annulaire (8) présente à l'état non comprimé un pli périphérique (13) bombé vers l'extérieur, s'écartant du fond de la rainure, ce pli s'étirant sous la pression de la bague de serrage (9).

2. Fixation selon la revendication 1, caractérisée en ce que la surface de contact du bord de soufflet profilé, située à l'extérieur en regardant dans la direction axiale du soufflet d'étanchéité (7), opposée à l'une des surfaces latérales de la rainure annulaire (8) est munie de gorge (16) qui forment un joint d'étanchéité à labyrinthe.

Fig. 1

Fig. 2

Fig. 3